# EUROPEAN PATENT APPLICATION

(11) **EP 4 826 820 A1**
(43) Date of publication of application: **21.10.2026**
(21) Application number: 26171480.2
(22) Date of filing: 09.04.2026
(51) Int. Cl.: H01M 10/0525, H01M 50/103, H01M 50/15, H01M 50/176, H01M 50/188, H01M 50/55, H01M 50/553, H01M 50/562, H01M 50/566

(54) **ELECTRICITY STORAGE DEVICE**

(30) Priority: 17.04.2025 JP 2025068128
(71) Applicant: Prime Planet Energy & Solutions, Inc., Chuo-ku, Tokyo 103-0022 (JP)
(72) Inventor: MAEDA, Hitoshi, Tokyo,, 103-0022 (JP); MATSUMOTO, Shigeru, Tokyo,, 103-0022 (JP)
(74) Representative: Kuhnen & Wacker Patent- und Rechtsanwaltsbüro PartG mbB

(57) **Abstract**

An electricity storage device (1) according to an embodiment of the present disclosure includes a case (10), a current collector terminal (30, 40) (positive electrode herein), and an insulating member (50). The insulating member (50) is joined to the terminal mounting hole (18) and the current collector terminal (30, 40) so as to fill a gap between the current collector terminal (30, 40) and the terminal mounting hole (18) of the case (10). The case (10) includes a first roughened portion (60) and a second roughened portion (62). The first roughened portion (60) is provided on at least one surface that is around the terminal mounting hole (18) so as to surround a perimeter of the terminal mounting hole (18), within a joining region (J1, J2) with the insulating member (50). The second roughened portion (62) is provided on at least one surface of the case (10) that is around the terminal mounting hole (18), outside of the joining region (J1, J2) with the insulating member (50).

## Description

### BACKGROUND

The present disclosure relates to an electricity storage device and a case incorporated by the electricity storage device.

JP 2022-079172 A discloses a battery including a battery case, an internal terminal, an external terminal, and an insulating member. The insulating member is disposed so as to fill a gap between the battery case and the internal terminal and a gap between the battery case and the external terminal, and is joined to the battery case, to the internal terminal, and to the external terminal.

In addition, the publication discloses that a surface roughening process is performed on a region of the lid of the battery case in which the insulating member is to be filled so that the minute surface irregularities of the lid are filled with the insulating member.

### SUMMARY

The present inventors have recognized that it is desirable, in the above-described battery, for example, to reduce the amount of heat that reaches the portions in which the insulating member is filled when heat is transferred from outside of a joining region of the battery case and the insulating member to the joining region. This is considered advantageous to maintain high joining quality between the battery case and the insulating member.

An electricity storage device according to the present disclosure includes a case, a current collector terminal, and an insulating member. The case includes a terminal mounting hole. The current collector terminal includes an insert portion inserted through the terminal mounting hole. One end of the current collector terminal extends inside of the case, and the other end is exposed outside of the case. The insulating member is joined to the terminal mounting hole and the current collector terminal so as to fill a gap between the current collector terminal and the terminal mounting hole of the case. The case includes a first roughened portion and a second roughened portion. The first roughened portion is disposed on at least one surface of a perimeter of the terminal mounting hole so as to surround the perimeter of the terminal mounting hole within a joining region to the insulating member. The second roughened portion is disposed on at least one surface around the terminal mounting hole and outside the joining region to the insulating member. The present technology can provide an electricity storage device that retains high joining quality between the case and the insulating member.

In another aspect, the present disclosure provides a case incorporated by any of the electricity storage devices disclosed herein. It may be said that the case as described above retains high joining quality between the case and the insulating member.

### BRIEF DESCRIPTION OF THE DRAWINGS

Fig. 1 is a perspective view schematically illustrating a battery according to one embodiment of the present disclosure.
Fig. 2 is a schematic vertical cross-sectional view taken along line II-II in Fig. 1.
Fig. 3 is a schematic view for illustrating problems in joining a case body and a sealing plate together.
Fig. 4 is a top view of the sealing plate shown in Fig. 1.
Fig. 5 is a schematic vertical cross-sectional view taken along line V-V in Fig. 1.
Fig. 6 is an enlarged view illustrating the inside of the frame indicated by dashed lines in Fig. 5.
Fig. 7 is a schematic view for illustrating the surface area factor at Ra 12.5.
Fig. 8 is a schematic view for illustrating the advantageous effects of the battery according to one embodiment of the present disclosure.
Fig. 9 is a schematic top view illustrating a sealing plate incorporated by a battery according to a second embodiment.
Fig. 10 is a view corresponding to Fig. 6, according to the second embodiment.
Fig. 11 is a schematic top view illustrating a sealing plate incorporated by a battery according to a third embodiment.
Fig. 12 is a view corresponding to Fig. 6, according to the third embodiment.

### DETAILED DESCRIPTION

Hereinbelow, some embodiments of the technology according to the present disclosure will be described with reference to the drawings. Throughout the drawings, like features, parts, and components that exhibit the same or similar workings are referred to by like reference symbols as appropriate. In addition, dimensional relationships (such as length, width, and thickness) shown in the drawings do not necessarily reflect actual dimensional relationships. It should be noted that the matters not specifically described in this description but necessary to carry out the technology disclosed herein can be understood as design variations by a skilled person based on the prior art in the related field. The technology disclosed herein may be implemented based on the contents disclosed in this description and the common general technical knowledge in the related field. Furthermore, the following description is not intended to limit the present disclosure to the embodiments described below.

It should be noted that the recitation of numerical ranges in the present description, such as "A to B", is meant to include any values between the upper limits and the lower limits, inclusive, that is, "greater than or equal to A to less than or equal to B" as well as "greater than A" and "less than B". In the present description, the term "electricity storage device" refers to a device that is capable of charging and discharging. Electricity storage devices include batteries, such as primary batteries and secondary batteries (including nickel-metal hydride batteries, non-aqueous electrolyte secondary batteries such as lithium-ion secondary batteries, and the like) and capacitors (physical energy storage devices), such as electric double-layer capacitors. Hereinbelow, a lithium-ion secondary battery (hereinafter referred to simply as a "battery"), which is one embodiment of the electricity storage device disclosed herein, is used as an example in the description. It should be noted that the following description is not intended to limit the electricity storage device to the lithium ion secondary battery.

In the following description, reference characters X, Y, and Z in the drawings represent the lateral axis of a battery 1, the longitudinal axis thereof orthogonal to the lateral axis, and the vertical axis thereof, respectively. In the drawings, terms front, rear, up, down, left, and right are indicated by reference characters F, Rr, U, D, L, and R, respectively. These directional terms are, however, merely provided for purposes in illustration and are not intended to limit the arrangements, embodiments and the like of the battery. The term "substantially rectangular shape" in the present description is intended to encompass, in addition to complete rectangular shapes (box-like shapes), for example, shapes in which the corners connecting the longer sides and the shorter sides of a rectangular shape have a rounded shape (rounded corner) and shapes in which cut-outs are provided in the corners portions. The term "substantially rectangular parallelepiped" may be intended to encompass, in addition to complete parallelepiped, for example, shapes in which their corners have rounded shapes (rounded corners) and shapes in which cut-outs are provided in their corners.

### Configuration of Battery 1

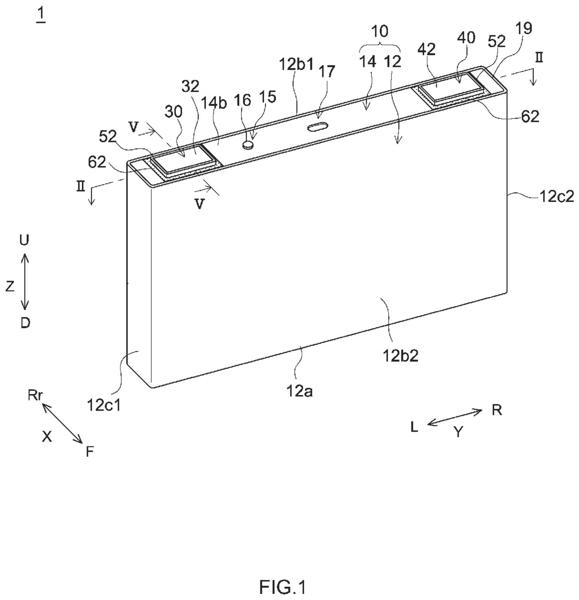

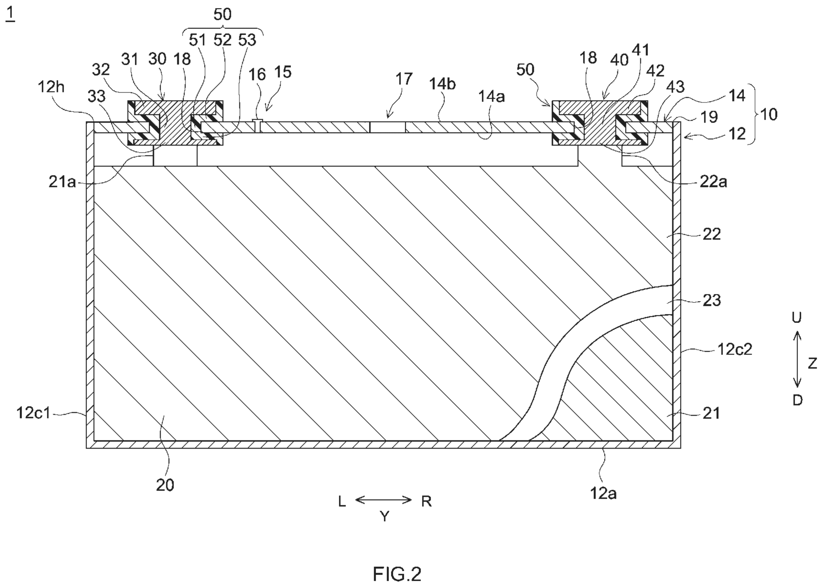

Fig. 1 is a perspective view schematically illustrating a battery 1 according to one embodiment of the present disclosure. Fig. 2 is a schematic vertical cross-sectional view taken along line II-II in Fig. 1. As illustrated in Figs. 1 and 2, the battery 1 includes, in the present embodiment, a case 10, an electrode body 20, current collector terminals (positive electrode terminal 30 and negative electrode terminal 40 herein), and an insulating member 50. The battery 1 herein has a flat prismatic form in a rectangular parallelepiped shape. Hereinbelow, each of the components will be described.

### Case 10

In the embodiment shown in Fig. 1, the case 10 is a flat prismatic container in a substantially rectangular parallelepiped shape. The case 10 includes a case body 12 and a sealing plate 14.

The case body 12 herein is a flat prismatic container in a substantially rectangular parallelepiped shape. In the embodiment shown in Fig. 1, the case body 12 includes a substantially rectangular bottom surface 12a, a pair of wider side surfaces 12b1 and 12b2, and a pair of narrower side surfaces 12c1 and 12c2. The pair of wider side surfaces 12b1 and 12b2 extend upward from the longer sides of the bottom surface 12a and oppose each other. The pair of narrower side surface 12c1 and 12c2 extend upward from the shorter sides of the bottom surface 12a and oppose each other. The area of each of the wider side surface 12b1 and 12b2 is greater than the area of each of the narrower side surface 12c1 and 12c2. The case 12 may preferably be, for example, made of a metal material. Examples of the metal material includes aluminum, aluminum alloys, iron, and iron alloys.

The sealing plate 14 herein is a substantially rectangular plate-shaped member. The sealing plate 14 is a plate-shaped member attached to an open end 12h of the case body 12. The sealing plate 14 is joined to the peripheral edge of the open end 12h of the case body 12. The joining portion 19 is a joining portion between the case body 12 and the sealing plate 14. Such joining may be carried out by, for example, laser welding. As illustrated in Fig. 2, the sealing plate 14 includes an inner surface 14a that exists facing the inside of the battery 1 and an outer surface 14b that exists facing the outside of the battery 1. The sealing plate 14 may also preferably be, for example, made of a metal material. Examples of the metal material includes aluminum, aluminum alloys, iron, and iron alloys.

As illustrated in Figs. 1 and 2, in the present embodiment, the sealing plate 14 includes a filling port 15, a gas vent valve 17, and a terminal mounting hole 18. The filling port 15 is a through hole for filling an electrolyte solution into the interior of the case 10 after the sealing plate 14 is attached to the case body 12. The filling port 15 is sealed with a sealing member 16 after filling the electrolyte solution. The gas vent valve 17 is a thinned portion that is designed to rupture when the pressure inside the case 10 rises higher than or equal to a predetermined value to expel the gas inside the case 10 to outside.

The sealing plate 14 includes a pair of positive and negative terminal mounting holes 18. The pair of terminal mounting holes 18 each is a hole through which a positive electrode terminal 30 and a negative electrode terminal 40 can be inserted. The terminal mounting holes 18 penetrate the inner surface 14a and the outer surface 14b of the sealing plate 14. The pair of terminal mounting holes 18 herein are arrayed along the longer side axis (i.e., the Y axis in Fig. 2) of the rectangular sealing plate 14. The pair of terminal mounting holes 18 are disposed at respective positions deviated from the central portion along the longer side axis of the sealing plate 14. The pair of terminal mounting holes 18 are disposed at positions close to respective ends of the longer side axis of the sealing plate 14. The terminal mounting holes herein 18 are cylindrical-shaped. The thickness of the case 10 may be, but is not particularly limited to, 10 mm to 40 mm, for example, or 5 mm to 10 mm.

### Electrode Body 20

As illustrated in Fig. 2, the electrode body 20 is housed inside the case 10. The electrode body 20 herein is housed inside the case body 12. The electrode body 20 is covered with an insulating film (not shown) or the like and is housed in the case body 12. The electrode body 20 herein is a flat, substantially rectangular parallelepiped-shaped wound electrode body in which a plurality of positive electrode sheets 21 (positive electrode) and a plurality of negative electrode sheets 22 (negative electrode) are wound with a plurality of separator sheets 23 (separator) interposed. The positive electrode sheets 21 and the negative electrode sheets 22 are alternately stacked with the separator sheet 23 interposed therebetween. The separators 23 are interposed between the positive electrode sheets 21 and the negative electrode sheets 22 to insulate the positive electrode sheets 21 and the negative electrode sheets 22 from each other. The positive electrode sheets 21, the negative electrode sheets 22, and the separator sheets 23 are stacked in a thickness direction (the X-axis direction in Fig. 1) of the battery 1. In the present embodiment, the electrode body 20 is disposed in the case 10 so that the winding axis of the electrode body 20, which is a wound electrode body, is perpendicular to the bottom surface 12a of the case 10 (that is, the battery 1 is a top tab type). Although not particularly limited thereto, the term "sheet" may mean a member having a thickness of 5 µm to 500 µm, for example.

The positive electrode sheet 21 is a member in which a positive electrode active material layer containing a positive electrode active material is formed on one side or both sides (both sides herein) of a positive electrode current collector. It is preferable that the positive electrode current collector be, for example, made of a metal material. Examples of such a metal material include aluminum, aluminum alloys, nickel, and stainless steels, for example. It is preferable that the positive electrode current collector be, for example, an aluminum foil. The positive electrode active material herein is a material that is capable of releasing lithium ions during charge and absorbing lithium ions during discharge. It is preferable that the positive electrode active material be a lithium-transition metal composite oxide, for example, and more preferably one containing at least one of Ni (nickel) and Co (cobalt). An example of such a lithium-transition metal composite oxide is lithium-nickel-cobalt-manganese composite oxide. The positive electrode active material layer may contain an optional component other than the positive electrode active material, such as a binder, a conductive agent, various types of additive components, and the like. The positive electrode sheet 21 includes positive electrode tabs 21a connected to the positive electrode terminal 30.

The negative electrode sheet 22 is a member in which a negative electrode active material layer containing a negative electrode active material is formed on one side or both sides (both sides herein) of a negative electrode current collector. It is preferable that the negative electrode current collector be, for example, made of a metal material. Examples of such a metal material include copper, copper alloys, nickel, and stainless steels, for example. It is preferable that the negative electrode current collector be, for example, a copper foil. The negative electrode active material herein is a material that is capable of absorbing lithium ions during charge and releasing the absorbed lithium ions during discharge. It is preferable that the negative electrode active material be, for example, a carbon material, such as graphite, and a silicon material. The negative electrode active material layer may contain an optional component other than the negative electrode active material, such as a binder, a conductive agent, various types of additive components, and the like. The negative electrode sheet 22 includes negative electrode tabs 22a connected to the positive electrode terminal 40.

The separator sheets 23 may be formed of, for example, an electrolyte permeable porous resin sheet that has required heat resistance. Examples of the separator sheets 23 include porous sheets (films) made of various types of resins, including polyethylene (PE), polypropylene (PP), celluloses, and polyamides. Such a porous sheet may have either a single layer structure or a layered structure including two or more layers (for example, a three-layer structure in which PP layers are formed on both faces of a PE layer). The surfaces of the separator sheets 23 may be provided with a heat resistant layer (HRL).

The inside of the case 10 houses an electrolyte solution, which is not shown. An example of the electrolyte solution is a non-aqueous electrolyte solution in which a supporting salt is dissolved in a non-aqueous solvent. Examples of the non-aqueous solvent include carbonate-based solvents, such as ethylene carbonate, dimethyl carbonate, and ethyl methyl carbonate. Examples of the supporting salt include fluorine-containing lithium salts, such as LiPF₆. The electrolyte solution may contain addition agents as needed.

### Positive Electrode Terminal 30 and Negative Electrode Terminal 40

As illustrated in Fig. 2, the positive electrode terminal 30 and the negative electrode terminal 40 are attached to the sealing plate 14 and also connected to the electrode body 20. The positive electrode terminal 30 is inserted through a terminal mounting hole 18. The positive electrode terminal 30 is connected to a plurality of positive electrode tabs 21a. It is preferable that the positive electrode terminal 30 be, for example, made of a metal material. The positive electrode terminal 30 may be made of, for example, aluminum.

As illustrated in Fig. 2, the positive electrode terminal 30 includes an insert portion 31 inserted through the terminal mounting hole 18. One end the positive electrode terminal 30 extends inside of the case 10, and the other end thereof is exposed outside of the case 10. The positive electrode terminal 30 herein includes a insert portion 31 inserted through a terminal mounting hole 18 of the sealing plate 14, a positive electrode external connecting portion 32 disposed outside of the case 10, and a positive electrode internal connecting portion 33 disposed inside of the case 10. The positive electrode external connecting portion 32 is connected to the upper end of the insert portion 31, and the positive electrode internal connecting portion 33 is connected to the lower end of the insert portion 31. The insert portion 31 is disposed between the positive electrode external connecting portion 32 and the positive electrode internal connecting portion 33. The positive electrode external connecting portion 32 is a portion that is exposed outside of the case 10 so that the electric power generated by the electrode body 20 can be taken outside. The positive electrode internal connecting portion 33 is a portion that is connected to the positive electrode tabs 21a. In the embodiment shown in Fig. 1, the positive electrode external connecting portion 32 is substantially rectangular-shaped when viewed from the top of the sealing plate 14. Also, the insert portion 31 herein is cylindrical-shaped.

As illustrated in Fig. 2, the negative electrode terminal 40 is inserted through a terminal mounting hole 18. The negative electrode terminal 40 is connected to a plurality of negative electrode tabs 22a. It is preferable that the negative electrode terminal 40 be, for example, made of a metal material. The negative electrode terminal 40 may be made of, for example, copper.

The negative electrode terminal 40 includes an insert portion 41 inserted through the terminal mounting hole 18. One end the negative electrode terminal 40 extends inside of the case 10, and the other end thereof is exposed outside of the case 10. The negative electrode terminal 40 herein includes a insert portion 41 inserted through a terminal mounting hole 18 of the sealing plate 14, a negative electrode external connecting portion 42 disposed outside of the case 10, and a negative electrode internal connecting portion 43 disposed inside of the case 10. The negative electrode external connecting portion 42 is connected to the upper end of the insert portion 41, and the negative electrode internal connecting portion 43 is connected to the lower end of the insert portion 41. The insert portion 41 is disposed between the negative electrode external connecting portion 42 and the negative electrode internal connecting portion 43. The negative electrode external connecting portion 42 is a portion that is exposed outside of the case 10 so that the electric power generated by the electrode body 20 can be taken outside. The negative electrode internal connecting portion 43 is a portion that is connected to the negative electrode tabs 22a. In the embodiment shown in Fig. 1, the negative electrode external connecting portion 42 is substantially rectangular-shaped when viewed from the top of the sealing plate 14. Also, the insert portion 41 herein is cylindrical-shaped.

### Insulating Member 50

As illustrated in Fig. 2, the insulating member 50 is joined to a terminal mounting hole 18 and a current collector terminal (the positive electrode terminal 30 or the negative electrode terminal 40 herein) so as to fill a gap between the current collector terminal and the terminal mounting hole 18 of the case 10. The insulating member 50 secures the current collector terminal and the sealing plate 14 to each other and insulates them from each other. The insulating member 50 herein is integrally formed with the current collector terminal and the sealing plate 14. That is, in the present embodiment, the current collector terminal, the insulating member 50, and the sealing plate 14 are provided as an integrally formed product.

In the embodiment shown in Fig. 2, on the positive electrode side, the insulating member 50 exists extending around the insert portion 31 so as to fill the gap between the insert portion 31 and the terminal mounting hole 18. The insulating member 50 also exists extending outside of the case 10 so as to fill the gap between the positive electrode external connecting portion 32 and the outer surface 14b of the sealing plate 14. The insulating member 50 also exists extending inside of the case 10 so as to fill the gap between the positive electrode internal connecting portion 33 and the inner surface 14a of the sealing plate 14.

In the embodiment shown in Fig. 2, on the negative electrode side, the insulating member 50 exists extending around the insert portion 41 so as to fill the gap between the insert portion 41 and the terminal mounting hole 18. The insulating member 50 also exists extending outside of the case 10 so as to fill the gap between the negative electrode external connecting portion 42 and the outer surface 14b of the sealing plate 14. The insulating member 50 also exists extending inside of the case 10 so as to fill the gap between the negative electrode internal connecting portion 43 and the inner surface 14a of the sealing plate 14.

In the embodiment shown in Fig. 2, the insulating member 50 includes a tubular portion 51, a first flange portion 52, and a second flange portion 53. The tubular portion 51 is a portion that is positioned between the terminal mounting hole 18 and the insert portion 31 (or the insert portion 41). The first flange portion 52 is a portion that extends in a horizontal direction (the Y-axis direction in Fig. 2) along the outer surface 14b of the sealing plate 14. The second flange portion 53 is a portion that extends in a horizontal direction along the inner surface 14a of the sealing plate 14. The tubular portion 51, the first flange portion 52, and the second flange portion 53 herein are integrally formed with each other. The length of the first flange portion 52 along the horizontal direction is longer than the external connecting portion (the positive electrode external connecting portion 32 or the negative electrode external connecting portion 42 herein). The length of the second flange portion 53 along the horizontal direction is longer than the internal connecting portion (the positive electrode internal connecting portion 33 or the negative electrode internal connecting portion 43 herein).

The insulating member 40 is made of, for example, resin. Examples of such a resin include synthetic resins including polyolefin resins, such as polypropylene (PP) and polyethylene (PE), and fluororesins, such as perfluoroalkoxy alkane and polytetrafluoroethylene (PTFE). The insulating member 50 may be made of one kind of resin or may be made of two or more kinds of resins. The insulating member 40 may contain an insulating filler as necessary. An example of such an insulating filler is a ceramic filler. Examples of such a ceramic filler include alumina, titania, silica, zirconia, and glass, for example.

There may be cases that heat produced outside of a joining region of the sealing plate 14 and the insulating member 50 transfers to the joining region. As an example, heat generated when joining the case body 12 and the sealing plate 14 together by laser welding may transfer to the joining region of the sealing plate 14 and the insulating member 50.

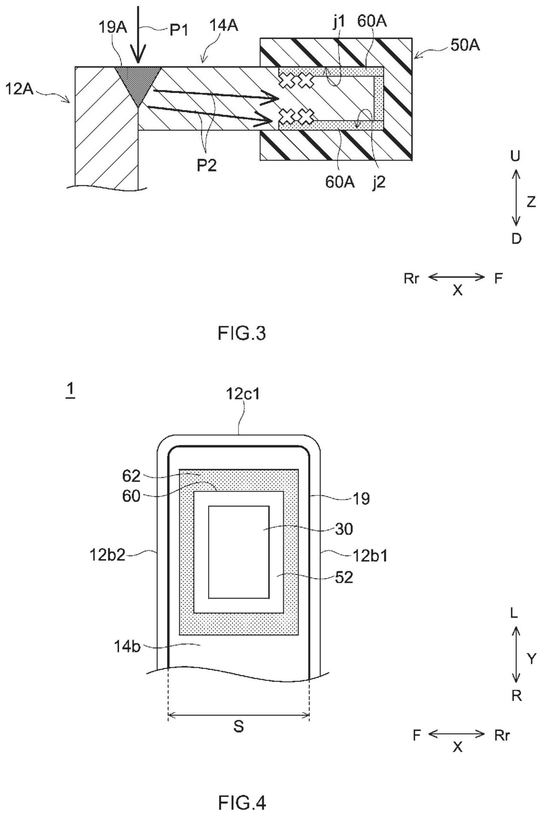

Here, Fig. 3 is a schematic view for illustrating problems in joining a case body 12A and a sealing plate 14A together. For example, in Fig. 3, the case body 12A and the sealing plate 14A are joined together at a joining portion 19A by laser welding. As illustrated in Fig. 3, heat generated by such laser welding may propagate to the joining regions j1 and j2 of the sealing plate 14A and the insulating member 50A (see arrows P1 and P2).

The present inventors considers that in such cases, it is desirable to reduce the amount of heat that reaches the portion filled with the insulating member 50A (corresponding to a roughened portion 60A in Fig. 3). It is considered advantageous to reduce the thermal effect on the roughened portion 60A and to maintain high joining quality between the sealing plate 14 and the insulating member 50. Accordingly, as a result of assiduous studies, the present inventors discovered the configuration provided with a second roughened portion 62 as shown in the following to complete the present disclosure.

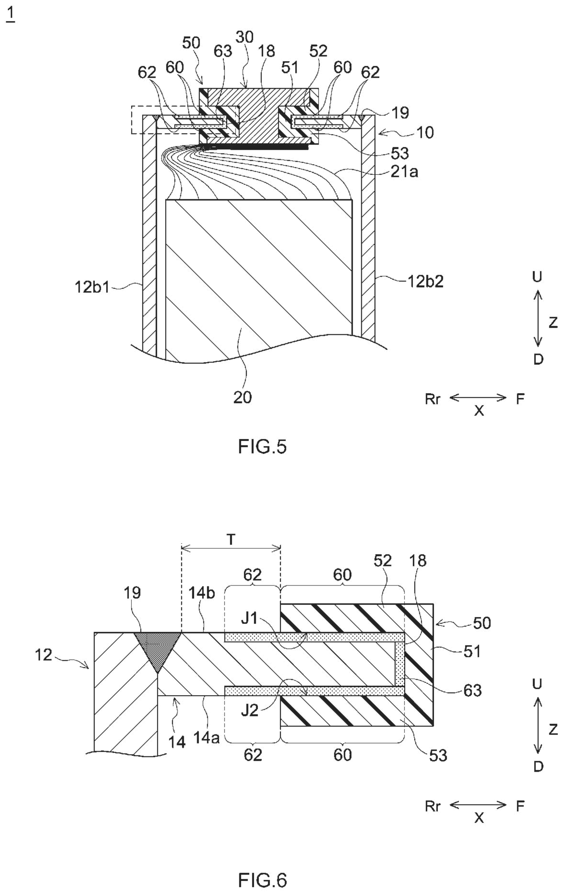

Herein, Fig. 4 is a top view of the sealing plate 14 shown in Fig. 1. Fig. 5 is a schematic vertical cross-sectional view taken along line V-V in Fig. 1. It can also be said that Fig. 5 is a schematic cross-sectional view when the battery 1 is cut along the shorter side axis of the sealing plate 14 (the X axis) near the center of the current collector terminal. Fig. 6 is an enlarged view illustrating the inside of the frame indicated by dashed lines in Fig. 5. It should be noted that in the present embodiment, a first roughened portion 60 and a second roughened portion 62 are provided on the peripheral edge of each of the positive electrode-side and the negative electrode-side terminal mounting holes 18. However, the following description describes the peripheral edge of the positive electrode-side terminal mounting hole 18 as an example. That is, in the present embodiment, the peripheral edge of the negative electrode-side terminal mounting hole 18 has the same configuration as that of the positive electrode-side one, although the description thereof is omitted.

As illustrated in Figs. 4 to 6, in the present embodiment, the sealing plate 14 includes a first roughened portion 60 and a second roughened portion 62. In the embodiment shown in Figs. 5 and 6, the first roughened portion 60 is provided on at least one surface (on both surfaces herein) of the sealing plate 14 that is around the terminal mounting hole 18 so as to surround the perimeter of the terminal mounting hole 18, within the joining regions J1 and J2 of the sealing plate 14 and the insulating member 50. In other words, within the joining regions J1 and J2 of the sealing plate 14 and the insulating member 50, the first roughened portion 60 herein is provided on the inner surface 14a of the sealing plate 14 that is around the perimeter of the terminal mounting hole 18 and on the outer surface 14b of the sealing plate 14 that is around the perimeter of the terminal mounting hole 18. More specifically, in the present embodiment, a part of the first roughened portion 60 is provided so as to surround the perimeter of the terminal mounting hole 18 within the joining region J1 of the outer surface 14b of the sealing plate 14 and the first flange portion 52. In addition, another part of the first roughened portion 60 is provided so as to surround the perimeter of the terminal mounting hole 18 within the joining region J2 of the inner surface 14a of the sealing plate 14 and the second flange portion 53.

In addition, in the embodiment shown in Figs. 5 and 6, the second roughened portion 62 is provided on at least one surface (on both surfaces herein) of the sealing plate 14 that is around the terminal mounting hole 18, outside of the joining regions J1 and J2 of the sealing plate 14 and the insulating member 50. In other words, outside of the joining regions J1 and J2 of the insulating member 14 and the sealing plate 50, the second roughened portion 62 herein is provided on the inner surface 14a of the sealing plate 14 that is around the perimeter of the terminal mounting hole 18 and on the outer surface 14b of the sealing plate 14 that is around the perimeter of the terminal mounting hole 18.

As illustrated in Fig. 4, in the present embodiment, the first roughened portion 60 and the second roughened portion 62 are provided in a frame shape so as to surround the perimeter of the terminal mounting hole 18 when viewed from the top of the sealing plate 14.

As illustrated in Figs. 5 to 6, in the present embodiment, the first roughened portion 60 and the second roughened portion 62 are provided continuously. In other words, the first roughened portion 60 and the second roughened portion 62 are provided without any gap.

The arithmetic mean roughness Ra1 of the first roughened portion 60 is, for example, greater than or equal to 0.1 µm, and from the viewpoint of increasing the joining strength between the sealing plate 14 and the insulating member 50, it may preferably be greater than or equal to 0.2 µm, and more preferably greater than or equal to 0.3 µm. The upper limit of the arithmetic mean roughness Ra1 of the first roughened portion 60 is, for example, less than or equal to 1 µm, and from the viewpoint of providing the sealing plate 14 with suitable rigidity, it may preferably be less than or equal to 0.5 µm, and more preferably less than or equal to 0.4 µm. In the present description, the term "arithmetic mean roughness Ra" is intended to mean a value measured according to JIS B 0601:2013, for example.

The mean spacing RSm1 of the surface irregularities of the first roughened portion 60 is, for example, greater than or equal to 0.01 µm, and from the viewpoint of increasing the joining strength between the sealing plate 14 and the insulating member 50, it may preferably be greater than or equal to 0.02 µm, and more preferably greater than or equal to 0.05 µm. The upper limit of the mean spacing RSm1 of the first roughened portion 60 is, for example, less than or equal to 0.2 µm, and from the viewpoint of providing the sealing plate 14 with suitable rigidity, it may preferably be less than or equal to 0.1 µm. In the present description, the term "mean spacing RSm of surface irregularities" is intended to mean a value measured according to JIS B 0601:2013, for example.

The ratio (RSm1/Ra1) of the mean spacing RSm1 to the arithmetic mean roughness Ra1 of the first roughened portion 60 is, for example, 1/10 to 1/5, and from the viewpoint of increasing the joining strength between the sealing plate 14 and the insulating member 50, it may preferably be 1/8 to 1/6.

The surface area factor of the first roughened portion 60 is, for example, greater than 1 (specifically, greater than or equal to 1.2, or greater than or equal to 1.5), and from the viewpoint of increasing the joining strength between the sealing plate 14 and the insulating member 50, it may preferably be greater than or equal to 2, more preferably greater than or equal to 5, and even more preferably greater than or equal to 10. The upper limit of the surface area factor of the first roughened portion 60 is, for example, less than or equal to 30, and from the viewpoint of providing the sealing plate 14 with suitable rigidity, it may preferably be less than or equal to 20. It should be noted that the term "surface area factor" in the present description means the surface area ratio of the irregular surface of a roughened portion relative to the surface area of the roughened portion that is assumed to have a completely flat surface, which is assumed to be 1. The surface area of a roughened portion may be measured by, for example, a BET method.

The arithmetic mean roughness Ra2 of the second roughened portion 62 is, for example, greater than or equal to 0.1 µm, and from the viewpoint of efficiently dissipating the heat produced in joining and sealing the opening, it may preferably be greater than or equal to 0.2 µm, and more preferably greater than or equal to 0.3 µm. The upper limit of the arithmetic mean roughness Ra2 of the second roughened portion 62 is, for example, less than or equal to 1 µm, and from the viewpoint of providing the sealing plate 14 with suitable rigidity, it may preferably be less than or equal to 0.5 µm, and more preferably less than or equal to 0.4 µm.

The mean spacing RSm2 of the second roughened portion 62 is, for example, greater than or equal to 0.01 µm, and from the viewpoint of efficiently dissipating the heat produced in joining and sealing the opening, it may preferably be greater than or equal to 0.02 µm, and more preferably greater than or equal to 0.05 µm. The upper limit of the mean spacing Sm2 of the second roughened portion 62 is, for example, less than or equal to 0.2 µm, and from the viewpoint of providing the sealing plate 14 with suitable rigidity, it may preferably be less than or equal to 0.1 µm.

The ratio (RSm2/Ra2) of the mean spacing RSm2 to the arithmetic mean roughness Ra2 of the first roughened portion 62 is, for example, 1/10 to 1/5, and from the viewpoint of efficiently dissipating the heat produced in joining and sealing the opening, it may preferably be 1/8 to 1/6.

The surface area factor of the second roughened portion 62 is, for example, greater than 1 (specifically, greater than or equal to 1.2, or greater than or equal to 1.5), and from the viewpoint of efficiently dissipating the heat produced in joining and sealing the opening, it may preferably be greater than or equal to 2, more preferably greater than or equal to 5, and even more preferably greater than or equal to 10. The upper limit of the surface area factor of the second roughened portion 62 is, for example, less than or equal to 30, and from the viewpoint of providing the sealing plate 14 with suitable rigidity, it may preferably be less than or equal to 20.

The arithmetic mean roughness Ra1 of the first roughened portion 60 may be the same as or different from the arithmetic mean roughness Ra2 of the second roughened portion 62. For example, from the viewpoint of making formation of the first roughened portion 60 and the second roughened portion 62 in the sealing plate 14 easier, it is preferable that the arithmetic mean roughness Ra1 of the first roughened portion 60 be the same as the arithmetic mean roughness Ra2 of the second roughened portion 62. On the other hand, from the viewpoint of enhancing heat dissipation capability, it is preferable that the arithmetic mean roughness Ra1 of the first roughened portion 60 be different from the arithmetic mean roughness Ra2 of the second roughened portion 62.

For example, in the latter case, it is preferable that the arithmetic mean roughness Ra2 of the second roughened portion 62 be less than the arithmetic mean roughness Ra1 of the first roughened portion 60. In that case, the ratio (Ra1/Ra2) of the arithmetic mean roughness Ra1 of the first roughened portion 60 to the arithmetic mean roughness Ra2 of the second roughened portion 62 is, for example, greater than 1 (greater than or equal to 1.2, or greater than or equal to 1.5), and from the viewpoint of suitably obtaining the above-described advantageous effects, it may preferably be greater than or equal to 2, and more preferably greater than or equal to 5. The upper limit of the just-mentioned ratio (Ra1/Ra2) is, for example, less than or equal to 20, and from the viewpoint of preventing unevenness in strength of the sealing plate 14, it may preferably be less than or equal to 10.

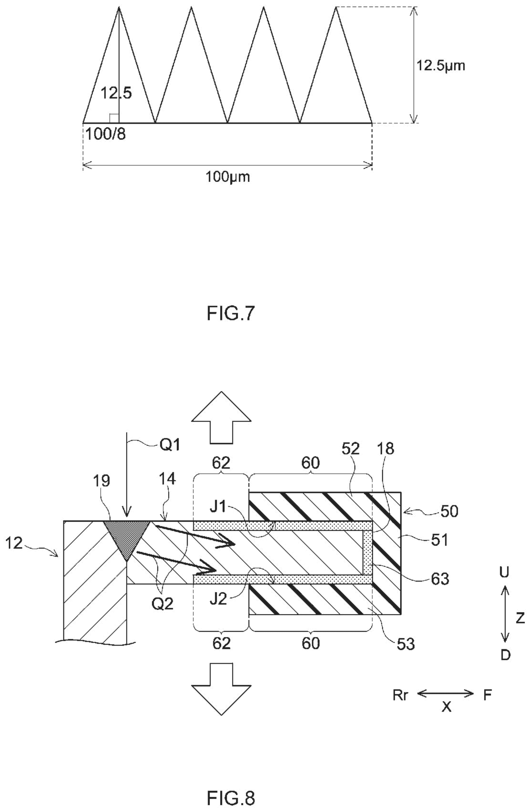

In one preferable embodiment, the surface area factor of the second roughened portion 62 may be set to greater than or equal to the surface area factor at Ra 12.5 and less than or equal to the surface area factor of the first roughened portion 60. Here Fig. 7 is a schematic view for illustrating the surface area factor at Ra 12.5. As illustrated in Fig. 7, the surface area factor at Ra 12.5 may be calculated by the equation {(sqrt((100/8)^2 + 12.5^2) × 8)^2}/(100^2) = 2 (factor of 2). Thus, the surface area factor of the second roughened portion 62 may be set to greater than or equal to 2 and less than or equal to the surface area factor of the first roughened portion 60.

For example, in the embodiment shown in Fig. 6, the shorter the distance T from the joining portion 19 to first roughened portion 60 along the shorter side axis (X axis) of the sealing plate 14, the more the heat generated during welding and sealing the opening reaches the first roughened portion 60. Accordingly, a configuration in which the distance T from the joining portion 19 to the first roughened portion 60 is shorter is suitable as the subject of this technology. Here, when the length of the sealing plate 14 along the shorter side axis is assumed to be S (see Fig. 4), the distance T is preferably less than or equal to (1/5) × S, more preferably less than or equal to (1/6) × S, from the viewpoint described above. The lower limit of the distance T is, for example, greater than or equal to (1/8) × S, or may be greater than or equal to (1/7) × S. From the viewpoint described above, the distance T may preferably be, but is not particularly limited to, less than or equal to 30 mm, more preferably less than or equal to 25 mm, and even more preferably less than or equal to 20 mm. The lower limit of the distance T is, for example, greater than or equal to 10 mm, and may be greater than or equal to 15 mm.

As illustrated in Figs. 5 and 6, in the present embodiment, the sealing plate 14 further includes a third roughened portion 63, in addition to the first roughened portion 60 and the second roughened portion 62. The third roughened portion 63 is provided in a region of the terminal mounting hole 18 that is in contact with the tubular portion 51 of the insulating member 50. Providing the third roughened portion 63 further increases the joining strength between the current collector terminal, the insulating member 50, and the sealing plate 14, which is desirable.

### Method of Manufacturing Battery 1

Next, an embodiment of a method of manufacturing the battery 1 will be described below. It should be noted that the battery 1 is characterized in that the sealing plate 14 includes the first roughened portion 60 and the second roughened portion 62, and therefore, the descriptions of features other than that will not be provided in detail.

First, a sealing plate 14 including a pair of positive and negative terminal mounting holes 18 is prepared. Then, a first roughened portion 60 is formed so as to surround the perimeter of the terminal mounting hole 18 in a joining region of the sealing plate 14 with an insulating member 50. In addition, a second roughened portion 62 is formed so as to surround the perimeter of the terminal mounting hole 18 outside of the joining region of the sealing plate 14 with the insulating member 50. In the present embodiment, the first roughened portion 60 and the second roughened portion 62 are formed on both surfaces, the inner surface 14a and the outer surface 14b, of the sealing plate 14. The first roughened portion 60 and the second roughened portion 62 may be formed by, for example, laser irradiation, sand blasting, electrolytic etching, or the like. Adjustment of values of the first roughened portion 60 and the second roughened portion 62, such as the arithmetic mean roughness, mean spacing of surface irregularities, surface area factor and the like may be easily carried out by adjusting laser irradiation conditions, types of sand blasting, etching conditions of electrolytic etching, and the like.

The sealing plate 14 including the first roughened portion 60 and the second roughened portion 62 produced in the above-described manner is integrally formed with current collector terminals (a positive electrode terminal 30 and a negative electrode terminal 40 herein) and an insulating member 50. Such integral forming may be carried out by a conventionally known method.

Subsequently, an electrode body 20 produced by a conventionally known method is prepared. Then, positive electrode tabs 21a and negative electrode tabs 22a are connected respectively to a positive electrode internal connecting portion 33 and a negative electrode internal connecting portion 43 of the integrally formed product produced in the above-described manner. Next, the circumference of the electrode body 20 is covered by an insulating film. The thus-prepared integrated assembly is fitted with a case body 12 and welded together by laser or the like. Then, an electrolyte solution is filled through a filling port 15, and initial charging, etc. are carried out, to obtain the battery 1.

As has been described above, the battery 1 according to the present embodiment includes a case 10, a current collector terminals (a positive electrode terminal 30 or a negative electrode terminal 40 herein), and an insulating member 50. The case 10 (the sealing plate 14 herein) includes a terminal mounting hole 18. The positive electrode terminal 30 and the negative electrode terminal 40, one end of each extends inside of the case 10 and the other end of which is exposed outside of the case 10, include insert portions 31 and 41 each inserted through the terminal mounting hole 18. The insulating member 50 is joined to the terminal mounting hole 18 and the current collector terminal so as to fill a gap between the current collector terminal and the terminal mounting hole 18 of the case 10. The case 10 is characterized by including a first roughened portion 60 and a second roughened portion 62. The first roughened portion 60 is provided on at least one surface that is around the terminal mounting hole 18 so as to surround the perimeter of the terminal mounting hole 18, within the joining regions J1 and J2 with the insulating member 50. The second roughened portion 62 is provided on at least one surface that is around the terminal mounting hole 18, outside of the joining regions J1 and J2 with the insulating member 50.

Here, Fig. 8 is a schematic view for illustrating the advantageous effects of the battery 1 according to one embodiment of the present disclosure. As illustrated in Fig. 8, in this technology, the sealing plate 14 is provided with the second roughened portion 62, which is not involved in resin bonding, for heat dissipation. The roughened portion has a larger surface area (for example, about 20 times larger than that of the case where the roughened portion is not provided), so it is possible to enhance heat dissipation capability (see the outlined arrows in the figure). As a result, in the process in which heat generated during welding of the sealing propagates from outside of the joining regions J1 and J2 of the sealing plate 14 and the insulating member 50 (from the joining portion 19 herein) to the joining regions J1 and J2, for example, heat is dissipated by the second roughened portion 62, which is provided outside of the joining regions J1 and J2. This reduces the adverse effects of the heat that has been applied outside of the joining regions J1 and J2 on the first roughened portion 60, which is joined to the insulating member 50 (see arrows Q1 and Q2 in the figure). This makes it possible to maintain high joining quality between the case body 12 and the insulating member 50. Moreover, as described previously, the second roughened portion 62, together with the first roughened portion 60, can be formed on the sealing plate 14. As a result, the battery 1 can be manufactured with a smaller number of processes. Furthermore, formation of the second roughened portion 62 in the sealing plate 14 is unlikely to adversely affect the rigidity of the sealing plate 14, which is also desirable from the viewpoint of maintaining the rigidity of the sealing plate 14.

As described above, the battery 1 according to the present embodiment includes the second roughened portion 62, which is provided on both surfaces around the terminal mounting hole 18. Such a configuration can further reduce propagation of the heat that has been applied outside of the joining regions J1 and J2 of the sealing plate 14 and the insulating member 50 to the first roughened portion 60, which is joined to the insulating member 50.

As described above, in the battery 1 according to the present embodiment, the first roughened portion 60 and the second roughened portion 62 are provided continuously. This further reduces propagation of the heat that has been applied outside of the joining regions J1 and J2 of the sealing plate 14 and the insulating member 50 to the first roughened portion 60, which is joined to the insulating member 50.

As described above, in the battery 1 according to the present embodiment, the arithmetic mean roughness Ra1 of the first roughened portion 60 and the arithmetic mean roughness Ra2 of the second roughened portion 62 are different. Such a configuration improves heat dissipation capability, which is desirable.

Hereinabove, some embodiments of the technology disclosed herein have been described. It should be understood, however, that the foregoing description is merely exemplary and is not intended to limit the scope of the claims. Various modifications and alterations of the above-described examples illustrated in the foregoing description are also within the scope of the disclosure as defined by the appended claims.

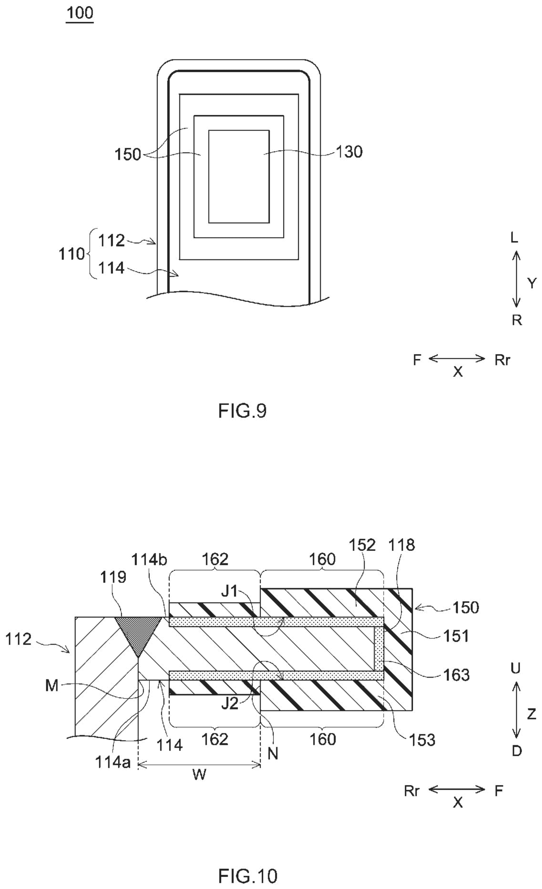

For example, Fig. 9 is a schematic top view illustrating a sealing plate 114 incorporated by a battery 100 according to a second embodiment. Fig. 10 is a view corresponding to Fig. 6, according to the second embodiment. As illustrated in Figs. 9 and 10, in the second embodiment, a case 110 includes a case body 112 and a sealing plate 114. A terminal mounting hole 118, a current collector terminal (a positive electrode terminal 130 herein), and an insulating member 150 are joined together so as to fill a gap between the terminal mounting hole 118 of the sealing plate 114 and the positive electrode terminal 130. The sealing plate 114 includes a first roughened portion 160 and a second roughened portion 162. Specifically, in the second embodiment, a part of the first roughened portion 160 is provided so as to surround the perimeter of the terminal mounting hole within the joining region J1 of an outer surface 114b of the sealing plate 114 and a first flange portion 152. In addition, another part of the first roughened portion 160 is provided so as to surround the perimeter of the terminal mounting hole 118 within the joining region J2 of the inner surface 114a of the sealing plate 114 and a second flange portion 153. The sealing plate 114 herein further includes a third roughened portion 163. The third roughened portion 163 is provided in a region of the terminal mounting hole 118 that is in contact with the tubular portion 151 of the insulating member 150. Moreover, the case body 112 and the sealing plate 114 are joined by a joining portion 119.

As illustrated in Figs. 9 to 10, in the second embodiment, the insulating member 150 extends to the second roughened portion 162. With such a configuration, the insulating member 150 extending to the second roughened portion 162 melts due to the heat generated in joining the case body 112 and the sealing plate 114. As a result, the amount of heat dissipated from the region around the second roughened portion 162 is increased (in other words, an increase in thermal mass is achieved). This further reduces propagation of the heat that has been applied outside of the joining regions J1 and J2 of the sealing plate 114 and the insulating member 150 to the first roughened portion 160, which is joined to the insulating member 150. Note that the insulating member 150 extending to the second roughened portion 162 may be formed by, for example, integral molding. In other respects, the battery 100 can be manufactured in a similar manner to the manufacturing method of the battery 1 described above.

In the embodiment shown in Fig. 10, distance W from an end M of the sealing plate 114 to an end N of the second roughened portion 162 on the terminal mounting hole 118 end along the shorter side axis (the X axis) of the sealing plate 114 may be, for example, less than or equal to (1/5) × S, or less than or equal to (1/6) × S. The lower limit of the distance W may be, for example, greater than or equal to (1/8) × S, or greater than or equal to (1/7) × S. Note that reference character S indicates the length of the sealing plate 114 along the shorter side axis. The distance W may be, but is not particularly limited to, for example, less than or equal to 30 mm, less than or equal to 25 mm, or less than or equal to 20 mm. The lower limit of the distance T may be, for example, greater than or equal to 10 mm, or greater than or equal to 15 mm.

The material that forms the insulating member 150 provided on the first roughened portion 160 and the material that forms the insulating member 150 provided on the second roughened portion 162 may be the same. Alternatively, they may be different. The present embodiment employs the former one.

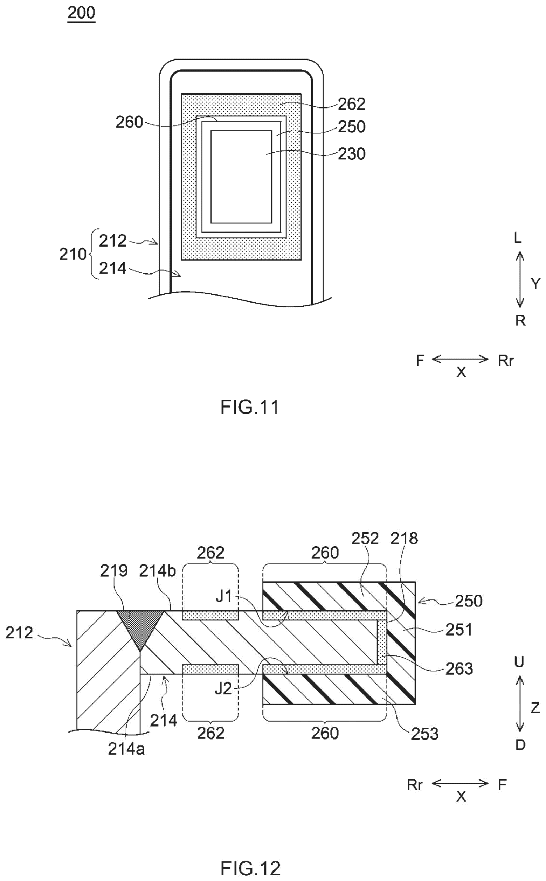

For example, Fig. 11 is a schematic top view illustrating a sealing plate 214 incorporated by a battery 200 according to a third embodiment. Fig. 12 is a view corresponding to Fig. 6, according to the third embodiment. As illustrated in Figs. 11 and 12, in the third embodiment, a case 210 includes a case body 212 and a sealing plate 214. A terminal mounting hole 218, a current collector terminal (a positive electrode terminal 230 herein), and an insulating member 250 are joined together so as to fill a gap between the terminal mounting hole 218 of the sealing plate 214 and the positive electrode terminal 230. The sealing plate 214 includes a first roughened portion 260 and a second roughened portion 262. Specifically, in the third embodiment, a part of the first roughened portion 260 is provided so as to surround the perimeter of the terminal mounting hole 218 within the joining region J1 of an outer surface 214b of the sealing plate 214 and a first flange portion 252. In addition, another part of the first roughened portion 260 is provided so as to surround the perimeter of the terminal mounting hole 218 within the joining region J2 of the inner surface 214a of the sealing plate 214 and a second flange portion 253. The sealing plate 214 herein further includes a third roughened portion 263. The third roughened portion 263 is provided in a region of the terminal mounting hole 218 that is in contact with the tubular portion 251 of the insulating member 250. Moreover, the case body 212 and the sealing plate 214 are joined by a joining portion 219.

As illustrated in Figs. 11 and 12, in the third embodiment, a gap is provided between the first roughened portion 260 and the second roughened portion 262. In other words, in the third embodiment, the second roughened portion 262 is provided in an isolated island-like form. Such a configuration makes it possible to reduce formation of burrs of the insulating member 250 when cutting the resin by pressing a mold against a flat portion between a roughened area and another roughened area, which is desirable. The battery 200 can be manufactured in a similar manner to the manufacturing method of the battery 1 described above, except that it uses the sealing plate 214 in which the second roughened portion 262 is provided in an isolated island-like form.

For example, although the battery 1 has a prismatic shape in the foregoing first embodiment, this is merely exemplary. In other embodiments, the battery 1 may have various other shapes, such as a cylindrical shape. Moreover, for example, although the electrode body 20 is a wound electrode body in the foregoing first embodiment, this is merely exemplary. In other embodiments, the electrode body 20 may be a stacked electrode body in which a plurality of positive electrode sheets (positive electrode) and a plurality of negative electrode sheets (negative electrode) are stacked with separator sheets (separator) interposed therebetween. Furthermore, for example, although the electrode body 20 includes the positive electrode tabs 21a and the negative electrode tabs 22a in the foregoing first embodiment, this is merely exemplary. In other embodiments, the electrode body 20 may include positive electrode active material non-existent portions and negative electrode active material layer non-existent portions, in place of the positive electrode tabs 21a and the negative electrode tabs 22a. In addition, for example, although the battery 1 is a top-tab type battery in the foregoing first embodiment, this is merely exemplary. In other embodiments, the battery 1 may be a side-tab type battery in which tabs protrude from a side of the electrode body 20. This also applies to the foregoing second and third embodiments as well.

For example, although the foregoing first embodiment applies the present technology to both the positive electrode-side and the negative electrode-side, this is merely exemplary. In other embodiments, the present technology may be applied to only one of the positive electrode-side and the negative electrode-side. This also applies to the foregoing second and third embodiments as well.

For example, although the first roughened portion 60 and the second roughened portion 62 are provided in the sealing plate 14 that constitutes the case 10 in the foregoing first embodiment, this is merely exemplary. In other embodiments, the first roughened portion 60 and the second roughened portion 62 may be provided in the case body 12 that constitutes the case 10. This also applies to the foregoing second and third embodiments as well.

For example, although the first roughened portion 60 and the second roughened portion 62 are provided continuously so as to surround the perimeter of the terminal mounting hole 18 in the foregoing first embodiment, this is merely exemplary. In other embodiments, the first roughened portion 60 and the second roughened portion 62 may be provided discontinuously so as to surround the perimeter of the terminal mounting hole 18. This also applies to the foregoing second and third embodiments as well.

For example, although the first roughened portion 60 and the second roughened portion 62 are provided on both the inner surface 14a and the outer surface 14b of the sealing plate 14 in the foregoing first embodiment, this is merely exemplary. In other embodiments, the first roughened portion 60 and the second roughened portion 62 may be provided on only one of the inner surface 14a and the outer surface 14b of the sealing plate 14. This also applies to the foregoing second and third embodiments as well.

For example, although the first roughened portion 60 is provided over the entire surface within the joining regions J1 and J2 of the sealing plate 14 and the insulating member 50 so as to surround the perimeter of the terminal mounting hole 18 in the foregoing first embodiment, this is merely exemplary. In other embodiments, the first roughened portion 60 may be provided in partial regions within the joining regions J1 and J2 of the sealing plate 14 and the insulating member 50 so as to surround the perimeter of the terminal mounting hole 18. This also applies to the foregoing second and third embodiments as well.

For example, although the third roughened portion 63 is provided in the sealing plate 14 in the foregoing first embodiment, this is merely exemplary. In other embodiments, the third roughened portion 63 may not be provided in the sealing plate 14. This also applies to the foregoing second and third embodiments as well.

The present disclosure may provide a case incorporated by any of the batteries disclosed herein. It may be said that the case with such a configuration retains high joining quality between the case and the insulating member.

As has been described above, the specific embodiments of the technology disclosed herein may include those set forth in the following items.

Item 1:
An electricity storage device including:
   a case including a terminal mounting hole;
   a current collector terminal including an insert portion inserted through the terminal mounting hole, one end of the current collector terminal extending inside of the case and another end of the current collector terminal being exposed outside of the case; and
   an insulating member joined to the terminal mounting hole and the current collector terminal so as to fill a gap between the current collector terminal and the terminal mounting hole of the case, wherein:
the case includes:
   a first roughened portion provided on at least one surface of the case that is around the terminal mounting hole so as to surround a perimeter of the terminal mounting hole within a joining region with the insulating member; and
   a second roughened portion provided on at least one surface of the case that is around the terminal mounting hole, the second roughened portion disposed outside of the joining region with the insulating member.

Item 2:
The electricity storage device according to item 1, wherein the second roughened portion is provided on both surfaces of the case that is around the terminal mounting hole.

Item 3:
The electricity storage device according to item 1 or 2, wherein the first roughened portion and the second roughened portion are provided continuously.

Item 4:
The electricity storage device according to item 3, wherein the insulating member extends to the second roughened portion.

Item 5:
The electricity storage device according to any one of items 1 to 4, wherein the first roughened portion and the second roughened portion have different arithmetic mean roughnesses.

Item 6:
A case incorporated by an electricity storage device according to any one of items 1 to 5.

## Claims

1. An electricity storage device (1) comprising:
a case (10) including a terminal mounting hole (18);
a current collector terminal (30, 40) including an insert portion (31) inserted through the terminal mounting hole (18), one end of the current collector terminal (30, 40) extending inside of the case (10) and another end of the current collector terminal (30, 40) being exposed outside of the case (10); and
an insulating member (50) joined to the terminal mounting hole (18) and the current collector terminal (30, 40) so as to fill a gap between the current collector terminal (30, 40) and the terminal mounting hole (18) of the case (10), wherein:
the case (10) includes:
a first roughened portion (60) provided on at least one surface of the case (10) that is around the terminal mounting hole (18) so as to surround a perimeter of the terminal mounting hole (18) within a joining region (J1, J2) with the insulating member (50); and
a second roughened portion (62) provided on at least one surface of the case (10) that is around the terminal mounting hole (18), the second roughened portion (62) disposed outside of the joining region (J1, J2) with the insulating member (50).

2. The electricity storage device (1) according to claim 1, wherein the second roughened portion (62) is provided on both surfaces of the case (10) that is around the terminal mounting hole (18).

3. The electricity storage device (1) according to claim 1 or 2, wherein the first roughened portion (60) and the second roughened portion (62) are provided continuously.

4. The electricity storage device (1) according to claim 3, wherein the insulating member (50) extends to the second roughened portion (62).

5. The electricity storage device (1) according to any one of claims 1 to 4, wherein the first roughened portion (60) and the second roughened portion (62) have different arithmetic mean roughnesses.

6. A case (10) incorporated by an electricity storage device (1) according to any one of claims 1 to 5.
